# EUROPÄISCHE PATENTSCHRIFT

(11) **EP 0 324 880 B1**
(45) Veröffentlichungstag und Bekanntmachung des Hinweises auf die Patenterteilung: **29.09.1993**
(21) Anmeldenummer: 88100829.6
(22) Anmeldetag: 21.01.1988
(51) Int. Cl.: H04N 9/64, H04N 9/68

(54) **Digitale Farbsignalverarbeitungsschaltung**
Digital colour signal processing circuit
Circuit numérique de traitement du signal de télévison couleurs

(43) Veröffentlichungstag der Anmeldung: 26.07.1989
(73) Patentinhaber: Deutsche ITT Industries GmbH, 79108 Freiburg (DE)
(72) Erfinder: Mehrgardt, Sönke, Dr. rer. nat., D-7806 March-Neuershausen (DE); Flamm, Peter Michael, Dipl.-Ing., D-7800 Freiburg i. Br. (DE)

(56) Entgegenhaltungen:
- US-A- 4 544 944

## Beschreibung

Digitale Farbsignalverarbeitungsschaltungen sind an die beim NTSC-, SECAM-, PAL- oder damit verwandten Farbfernsehstandards, wie z.B. D2-MAC, gemeinsame Art der Farbcodierung angepaßt. Und zwar ist dies die übliche Codierung des Farbartsignals mittels des (R-Y)- und des (B-Y)-Farbdifferenzsignals, welche den Farbort des jeweiligen Bildpunktes in der Farbebene, vgl. die CIE-Normfarbtafel nach der deutschen Norm DIN 5033, genau definieren. Da ferner der jeweilige Helligkeitswert (=Y) als Y-Signal vorliegt, sind mit diesen drei Signalen für den jeweiligen Bildpunkt somit der **Farbton**, die **Farbsättigung** und die **Helligkeit** eindeutig festgelegt.

Diese Art der Codierung ermöglicht bekanntlich die gleichzeitige Übertragung der Farbartinformation, nämlich des jeweiligen Farbtons und der jeweiligen Farbsättigung, innerhalb des Spektrums des Y-Signals und damit die Kompatibilität von Farb- und Schwarz-Weiß-Fernsehsignalen.

Beim NTSC- und PAL-Standard werden die beiden Farbdifferenzsignale in Quadraturmodulation gleichzeitig mittels eines einzigen Farbhilfsträgers übertragen, dessen Phase und Amplitude moduliert werden und dessen Frequenz im Bereich des Y-Signals liegt.

Beim SECAM-Standard wird in einer Zeile das eine der beiden Farbdifferenzsignale in Frequenzmodulation mittels eines ersten Farbhilfsträgers und in der folgenden Zeile das andere Farbdifferenzsignal in Frequenzmodulation mittels eines zweiten Farbhilfsträgers übertragen. Der Modulationsbereich der beiden Farbhilfsträger liegt wie beim PAL/NTSC-Standard innerhalb des Y-Signal-Frequenzbereiches.

Beim D2-MAC-Standard wird ebenfalls zeilenweise alternierend wie beim SECAM-Standard eines der beiden Farbdifferenzsignale übertragen, aber in Basisbandlage, weil statt der Frequenzmultiplexübertragung der Farbartinformation innerhalb des Y-Frequenzbereiches eine Zeitmultiplexübertragung erfolgt, bei der die Farbartinformation und das Y-Signal innerhalb einer Zeile zeitlich getrennt sind.

Nach der Abtrennung des (R-Y)- und des (B-Y)-Farbdifferenzsignals aus dem Farbfernsehsignalgemisch, z.B. durch Demodulation des Farbhilfsträgers, erfolgt die eigentliche Farbsignalverarbeitung wie üblich mit den beiden (R-Y)- und (B-Y)-Farbdifferenzsignalen. Bei der digitalen Farbsignalverarbeitung liegen diese beiden Signale und das Y-Signal als digitale Daten vor, d.h. die Digitalisierung erfolgt vor oder nach der Abtrennung; dies gehört indessen nicht zum Gegenstand der Erfindung.

Das Y-Signal ist einer eigenen Y-Verarbeitungsstufe zugeführt und wird anschließend in der Farbmatrix mit den beiden Farbdifferenzsignalen kombiniert, wodurch die eigentlichen Werte für das R(ot)-, G(rün)- und B(lau)-Signal erzeugt werden. Die Dematrizierung ist ebenfalls nicht Gegenstand der Erfindung,

Durch die Kombination von Farbton und Farbsättigung in den beiden (R-Y)- und (B-Y)-Farbdifferenzsignalen sind bei deren analoger Verarbeitung üblicherweise jeweils beide Komponenten betroffen, auch wenn nur eines von beiden verändert werden soll.

Bei digitaler Signalverarbeitung ist aus der US-A-4,544,944 eine Schaltungsanordnung bekannt, die eine von der Farbsättigung unabhängige automatische Korrektur des Hautfarbtons ermöglicht. Dazu werden die beiden Komponenten mittels eines Koordinatenwandlers, der kartesische in polare Koordinaten umwandelt, getrennt und bei der Koordinatenrückwandlung für das Farbtonsignal Umsetztabellen verwendet, die für Farbtöne in der Umgebung des Hautfarbtons modifizierte Ausgangswerte abgeben. Optional sind für Farbton und Farbsättigung getrennte Einstellmöglichkeiten über von extern zuführbare Steuersignale vorgesehen, die den Farbton statisch verschieben können bzw. von einer automatischen Verstärkungseinstellung gespeist werden.

Es ist Aufgabe der Erfindung ausgehend von den getrennten Komponenten der Farbdifferenzsignale weitere Möglichkeiten zur Verbesserung der Bildwiedergabe anzugeben.

Durch die digitale Signalverarbeitung sind wesentlich komplexere Schaltungen als in der analogen Technik realisierbar, die auch deutlich über die einfachen Einstellmöglichkeiten der US-A-4,544,944 hinausgehen.

Wird das Ausgangssignal eines Filters, an dessen Eingang das Farbsättigungssignal liegt, dem Farbtonsignal additiv überlagert, so läßt sich damit beispielsweise eine Verbesserung der Farbkanten in Abhängigkeit vom Farbsättigungssignal erreichen.

Wird das Ausgangssignal eines Filters, an dessen Eingang das Farbtonsignal anliegt als Steuersignal für die Verstärkung oder Dämpfung des Farbsättigungssignals verwendet, so ist damit beispielsweise eine beliebige Betonung oder Abschwächung der Farbsättigung bestimmter Farbtonbereiche möglich.

Spezielle Filter können zusätzlich z.B. das Farbrauschen unterdrücken und über weitere Eingänge können die modifizierten Farbton- und Farbsättigungssignale noch von zusätzlichen Signalen, wie z.B. einem Farbton-Steuersignal, abhängig sein.

Ferner kann die Anzahl der Quantisierungsstufen oder die Verarbeitungsfrequenz des Farbtons unterschiedlich gegenüber der der Farbsättigung gewählt werden, weil das Auge anders auf Farbton-Sprünge als auf Farbsättigungs-Sprünge reagiert.

Weitere Vorteile ergeben sich bei der Speicherung der Bilddaten und bei ihrer Verarbeitung, weil die Technik der Datenreduktion an die unterschiedlichen Anforderungen der Farbton- und der Farbsättigungswiedergabe angepaßt werden kann. Damit wird aber auch die flimmerfreie Bildwiedergabe erleichtert, denn der Datenreduktion bei der Speicherung entspricht eine Interpolation der gespeicherten Daten bei der Wiedergabe, und zwar wieder getrennt für Farbton und Farbsättigung.

Die Erzeugung der polaren aus den kartesischen Koordinaten setzt digitale (R-Y)- und (B-Y)-Farbdifferenzsignale voraus, wie sie beispielsweise als Ausgangssignale eines digital arbeitenden Farbdemodulators entstehen, vgl. z.B. EP-A 38 464 (= US-A-4 352 123, ITT-Case P.M. Flamm 11).

Die Erfindung wird nun anhand der Figuren der Zeichnung näher erläutert:
Fig. 1 zeigt als Blockschaltbild schematisch ein Ausführungsbeispiel der Erfindung,
Fig. 2 zeigt schematisch ein Ausführungsbeispiel für die Farbtonstufe,
Fig. 3 seigt schematisch ein anderes Ausführungsbeispiel für die Farbtonstufe,
Fig. 4 zeigt schematisch ein Ausführungsbeispiel für die Farbsättigungsstufe,
Fig. 5 zeigt schematisch ein Ausführungsbeispiel für die PAL-Kompensation,
Fig. 6 zeigt schematisch ein Ausführungsbeispiel, bei dem das Phasenwinkelsignal durch das Betragsignal veränderbar ist, und
Fig. 7 zeigt schematisch ein Ausführungsbeispiel, bei dem das Betragsignal in seinem Wert durch das Phasenwinkelsignal veränderbar ist.

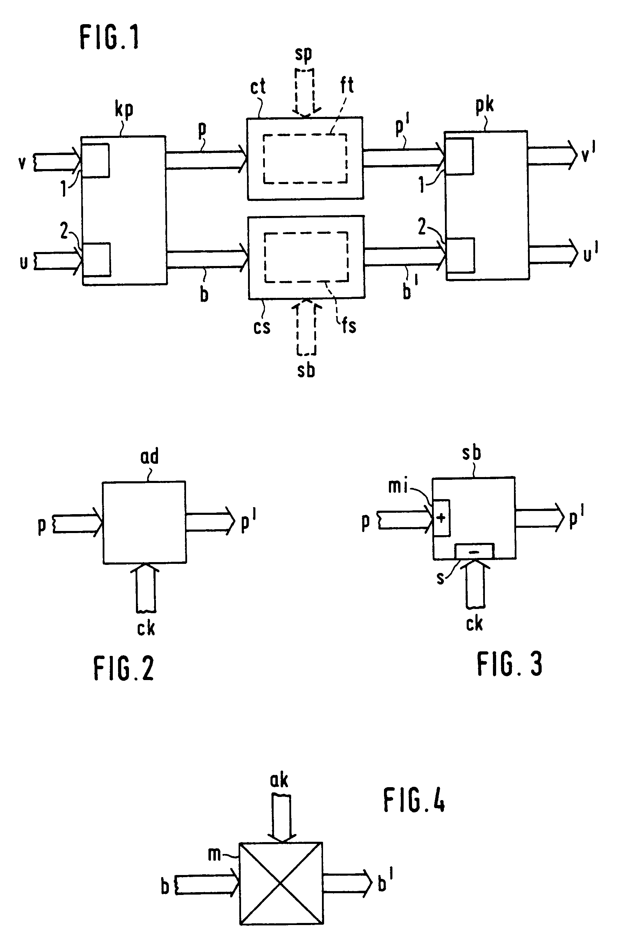

Das Blockschaltbild des Ausführungsbeispiels nach Fig. 1 zeigt das (R-Y)- und das (B-Y)-Farbdifferenzsignal v, u, die als digitale Signale dem ersten bzw. zweiten Eingang 1, 2 des Koordinaten-Wandlers (kp) zugeführt sind. Dieser ordnet die jeweiligen Daten der Eingangssignale einem kartesischen Koordinatensystem als Daten eines resultierenden Zeigers innerhalb der vier Quadranten zu. Von diesem resultierenden Zeiger wird der jeweilige Phasenwinkel und der jeweilige Betrag bestimmt und als das Phasenwinkelsignal p und als das Betragsignal b in digitaler Form abgegeben.

Die Realisierung des Koordinatenwandlers kp ist beispielsweise dadurch möglich, daß durch Quotientenbildung aus dem (R-Y)- und dem (B-Y)-Farbdifferenzsignal der zugehörige Tangens-Wert bestimmt wird, der über eine Arcus-Tangens-Tabelle den zugehörigen Phasenwinkel ergibt. Der Wert des Phasenwinkels ist auch der digitale Wert des Phasenwinkelssignals p. Die Mehrdeutigkeit der Phasenwinkelbildung über den Arcus-Tangens wird durch logische Verknüpfung der Vorzeichen der beiden Farbdifferenzsignale beseitigt.

Der Betrag des resultierenden Zeigers ergibt sich aus der Bildung der Summe der Quadrate des (R-Y)- und des (B-Y)-Farbdifferenzsignals, aus der dann die Quadratwurzel gezogen wird. Diese Berechnung ist mittels geeigneter Rechenbausteine im Koordinatenwandler leicht zu realisieren.

Eine andere Realisierung des Koordinatenwandlers kp stützt sich auf ein bekanntes Iterationsverfahren, das bis auf eine einzige Multiplikation nur Additionen und Subtraktionen erfordert. Je nach der Zahl der Iterationsschritte ist dabei eine beliebige Genauigkeit erreichbar. Somit eignet sich eine Schaltungsanordnung, die nach diesem Verfahren arbeitet, besonders für die erforderliche schnelle Koordinatenumwandlung, weil sie weder Divisionen noch Quadratwurzelbildungen enthält. Dieses Verfahren ist als CORDIC-Verfahren in "IRE Transactions on Electronic Computers", September 1959, Seite 333 bis 334 beschrieben und enthält als Blockschaltbild die zugehörige arithmetischen Schaltungseinheiten.

In Fig. 1 ist das Phasenwinkelsignal p der Farbtonstufe ct zugeführt, die z.B. die Farbton-Filterschaltung ft enhält. Diese kann beispielsweise Farbkanten versteilern, indem sie bestimmte Frequenzen hervorhebt, während andere Frequenzen, die eher ein Farbrauschen darstellen, in ihrer Amplitude abgesenkt werden. Eine Steuerung der Farbtonstufe ct ist mittels des Farbton-Steuersignals sp möglich, das in Fig. 1 über die gestrichelt gezeichnete Datenleitung der Farbtonstufe ct zugeführt ist.

Beispielsweise bei der Verwendung der Farbtonstufe für die Fleshtone-Korrektur sollen Farbwerte in der Nähe des Hautfarbtons in Richtung dieses Farbtonfestwertes korrigiert werden. Dies ist insbesondere dort wichtig, wo Farbfernsehsignale nach dem NTSC-Farbfernsehstandard verarbeitet werden, weil dort Phasenfehler bei der Signalübertragung den Farbton verändern, was insbesondere bei der Hautfarbe stört. Eine Fleshtone-Korrektur mit der digitalen Signalverarbeitungsschaltung nach der Erfindung wird dadurch erreicht, daß das Phasenwinkelsignal p innerhalb der Farbtonstufe ct über einen nichtlinearen Verzerrer geführt ist, der Signale im Bereich des Hautfarbtons innerhalb eines engeren Wertebereichs komprimiert.

In Fig. 1 ist der Farbsättigungsstufe cs das Betragsignal b als Eingangssignal zugeführt, welche die Farbsättigungs-Filterschaltung fs enthalten kann. Mittels des von außen zuführbaren Farbsättigungs-Steuersignals sb kann die Farbsättigung auch von anderen Schaltungsteilen gesteuert werden, z.B. über einen Raumlichtsensor oder manuell über eine Fernbedienung.

Das Ausgangsignal der Farbtonstufe ct ist das modifizierte Phasenwinkelsignal p′, das dem ersten Eingang des Koordinaten-Rückwandlers pk zugeführt ist. Dessen zweitem Eingang ist das modifizierte Betragsignal b′, nämlich das Ausgangssignal der Farbsättigungsstufe cs zugeführt. Der Koordinaten-Rückwandler pk erzeugt aus den Polarkoordinaten wieder die kartesischen Koordinaten des Farbzeigers und bildet daraus das modifizierte (R-Y)- und das modifizierte (B-Y)-Farbdifferenzsignal v′, u′.

Die weitere Verarbeitung dieser Signale ist in Fig. 1 nicht mehr dargestellt. Sie werden schließlich zusammen mit dem Y-Signal der Farbmatrix zugeführt, die das R-, G- und das B-Signal erzeugt. Dabei können z.B. die Signale, bevor sie der Farbmatrix zugeführt werden, über Digital-Analog-Wandler zurückgewandelt werden, weil die Farbmatrix in analoger Ausführung besonders einfach wird und die Ansteuerung der drei Farbkathoden der Farbfernsehbildröhre analoge Signale erfordert.

Der Koordinatenrückwandler pk enthält beispielsweise eine in einem ROM-Speicher abgespeicherte Cosinus- und Sinus-Tabelle, als deren Adressen sämtliche Werte des modifizierten Phasenwinkelsignals p′ dienen. Die zugehörigen Cosinus- bzw. Sinus-Werte werden mit den Werten des modifizierten Betragsignals b′ multipliziert; damit liegen die Werte der kartesischen Koordinaten des Farbzeigers bereits fest. Dabei ist dem Cosinus-Wert bzw. dem Sinus-Wert das modifizierte (B-Y)- bzw. das modifizierte (R-Y)-Farbdifferenzsignal u′, v′ zugeordnet.

Fig. 2 zeigt schematisch ein einfaches anderes Ausführungsbeispiel der Farbtonstufe ct, und zwar besteht diese aus dem Addierer ad, dem als Eingangssignale das Phasenwinkelsignal p und das Farbtoneinstell- oder -korrektursignal ck zugeführt sind. Das Summensignal ist das modifizierte Phasenwinkelsignal p′. Bei dem Farbtoneinstell- oder -korrektursignal ck kann es sich beispielsweise um das Farbton-Steuersignal sp von Fig. 1 handeln, was der Farbtonstufe ct von anderen Schaltungsteilen zugeführt ist. Zum Beispiel kann dies ein Raumhelligkeits-Sensor sein oder das Ausgangssignal einer Fernbedienungs-Empfängerschaltung oder zwischengespeicherte Daten aus einer automatischen Abgleichroutine oder aus einer vorangehenden Service-Einstellung.

Fig. 3 zeigt ein anderes Ausführungsbeispiel der Farbtonstufe ct, bei der der Subtrahierer sb der Farbton-Änderung dient. Das Phasenwinkelsignal p ist dem Minuend-Eingang mi und das Farbtoneinstell- oder -korrektursignal ck dem Subtrahend-Eingang s des Subtrahierers sb zugeführt, dessen Ausgangssignal das modifizierte Phasenwinkelsignal p′ ist. Die Farbtonstufen nach Fig. 2 und 3 sind in ihrem Aufbau und ihrer Funktion somit einander sehr ähnlich.

Fig. 4 stellt ein einfaches Ausführungsbeispiel der Farbsättigungsstufe cs dar. Sie besteht aus dem Multiplizierer m, dem als Eingangssignale das Betragsignal b und der Betrags-Korrekturfaktor ak zugeführt sind. Im Multiplizierer m werden die Daten dieser beiden Signale miteinander multipliziert und ergeben somit das modifizierte Betragsignal b′. Die Farbsättigungsstufe cs stellt in diesem Fall einen regelbaren Verstärker für das Betragsignal b und damit die Farbsättigung dar. Der Betrags-Korrekturfaktor ak steuert dabei die Verstärkung oder Abschwächung und kann z.B. auch identisch mit dem Farbsättigungs-Steuersignal sb von Fig. 1 sein.

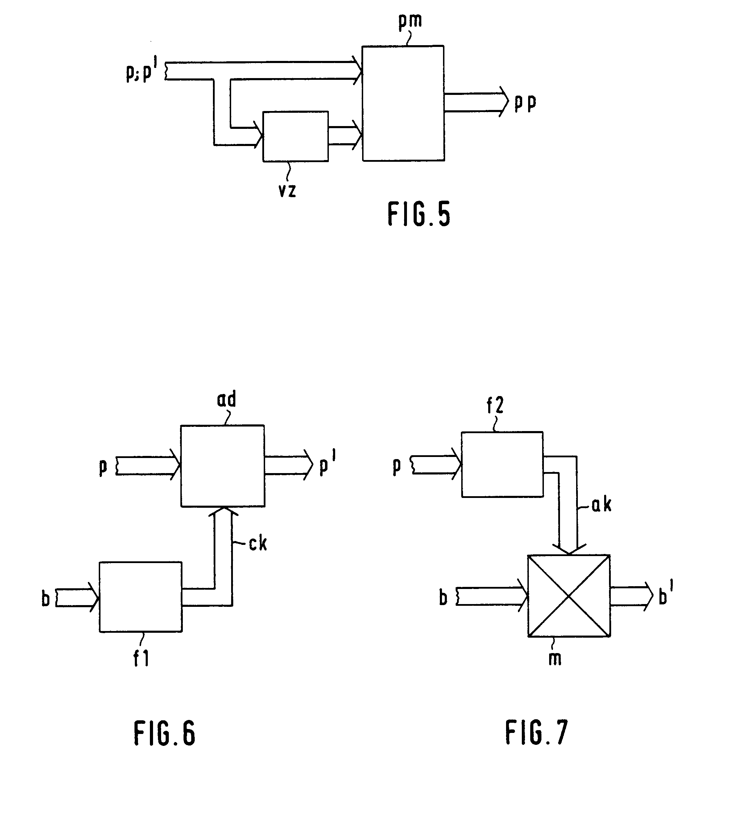

Fig. 5 zeigt schematisch, wie einfach die PAL-Zeilenkompensation ist. Beim PAL-Standard wird bekanntlich das (R-Y)-Farbdifferenzsignal von Zeile zu Zeile mit alternierender Phase, nämlich mit +90° oder -90° ausgesendet. Durch Addition des (R-Y)-Farbdifferenzsignals mit dem vorzeichenrichtigen, aber um eine Zeile verzögerten (R-Y)-Farbdifferenzsignals und durch die Addition des (B-Y)-Farbdifferenzsignals mit dem ebenfalls um eine Zeile verzögerten (B-Y)-Farbdifferenzsignals wird bei der bisher üblichen PAL-Kompensation ein resultierender Farbzeiger aus dem jeweiligen Wert der beiden Farbdifferenzsignale zweier aufeinanderfolgenden Zeilen gebildet. Phasenfehler des Übertragungsweges werden somit weitgehend kompensiert, allerdings tritt ab 40° Phasenfehler ein deutlicher Entsättigungseffekt der Farben ein. Dies wird bei der PAL-Kompensation nach Fig. 5 vermieden. Das unmodifizierte oder das modifizierte Phasenwinkelsignal p, p′ ist dabei dem PAL-Mittelwertbildner pm einmal direkt und einmal um die Dauer einer Bildzeile verzögert über die Verzögerungsleitung vz zugeführt. Der PAL-Mittelwertbildner pm ist dabei ein modifizierter Addierer, der aus den beiden Eingangssignalen das Summensignal bildet und durch zwei teilt, was im natürlichen Dualcode nur einer einfachen Stellenverschiebung entspricht. Das Ausgangssignal ist das kompensierte Phasenwinkelsignal pp. Eine Verkleinerung des Betragsignals und eine damit verbundene Entsättigung findet nicht statt.

Dies ist ein besonderer Vorteil der Schaltungsanordnung nach Fig. 5. Ein weiterer Vorteil ist darin zu sehen, daß nur noch ein einziges Signal, nämlich das Phasenwinkelsignal p bzw. p′, um eine Zeile verzögert werden muß und nicht zwei Signale, nämlich die beiden Farbdifferenzsignale wie bei den bisherigen Verfahren. Von Vorteil ist es dabei auch, daß die beiden Phasenwinkelsignale p; p′ jeweils als reine Farbtonsignale in der Bandbreite auf etwa 1-2 MHz begrenzt sind, weil damit ihre Verarbeitungstsakt-Frequenz entsprechend niedrig bleiben kann.

Die PAL-Kompensationsschaltung nach Fig. 5 ist z.B. zwischen den Koordinatenwandler kp und die Farbtonstufe ct eingefügt, wenn Signale nach dem PAL-Farbfernsehstandard zu verarbeiten sind.

Fig. 6 ist ein spezielles Ausführungsbeispiel der Schaltungsanordnung nach Fig. 2, und zwar wird das Farbtoneinstell- oder -korrektursignal ck aus dem Betragsignal b mittels einer ersten Filterschaltung f1 abgeleitet. Mit dieser Anordnung ist beispielsweise eine Verbesserung der Farbkanten in Abhängigkeit vom Betragsignal b möglich.

Fig. 7 stellt eine ähnliche Schaltungsanordnung dar, bei der die Beeinflussung des Betragsignals b über die zweite Filterschaltung f2 vom Phasenwinkelsignal p gesteuert ist. Durch die Verknüpfung des Betragsignals b mit dem Phasenwinkelsignal p kann z.B. eine beliebige "Verbeulung" des Farbkreises vorgenommen werden. Dies kann z.B. der Matrizierung dienen. Ferner ist eine beliebige Betonung oder Abschwächung der Farbsättigung bestimmter Farbtonbereiche möglich.

Das Phasenwinkelsignal p kann ferner vorteilhaft für die Farbträger-Phasenverriegelungsschleife (= Farbträger-PLL), die beim NTSC- und PAL-Standard der Demodulation des mitübertragenen Farbhilfsträgers dient, verwendet werden. Die Farbträger-PLL muß dazu phasenstarr mit der mitübertragenen Bezugsphase des Farbhilfsträgers oder einem anderen Bezugsphasensystem verriegelt werden. Diese Verwendung ist möglich, weil das Phasenwinkelsignal p völlig unabhängig von der Amplitude des empfangenen Farbfernseh-Signalgemisches ist und daher vor der Farb-Amplituden-Regelschaltung (= Automatic Color Control = ACC) abgegriffen werden kann, was für die Phasenregelung von Vorteil ist.

## Patentansprüche

1. Digitale Farbsignalverarbeitungsschaltung für Fernsehempfangsteile, der die Farbinformation mittels eines (R-Y)-Farbdifferenzsignals (v) und eines (B-Y)-Farbdifferenzsignals (u) zugeführt wird und bei der aus den (R-Y)- und dem (B-Y)-Farbdifferenzsignal (v, u) mittels eines Koordinatenwandlers (kp), der kartesische in polare Koordinaten umwandelt, ein Phasenwinkelsignal (p) und ein Betragssignal (b) des resultierenden Zeigers gebildet werden,
dadurch gekennzeichnet, daß
das Betragssignal (b) einer Farbsättigungsstufe (cs) zugeführt wird, deren Ausgang ein modifiziertes Betragssignal (b') abgibt, und daß das Phasenwinkelsignal (p) einer Farbtonstufe (ct) zugeführt wird, in der einem ersten Eingang eines Addieres (ad) das Phasenwinkelsignal (p) und einem zweiten Eingang des Addierers (ad) ein Farbtoneinstell- oder -Korrektursignal (ck) zugeführt werden und der Ausgang des Addierers (ad) ein modifiziertes Phasenwinkelsignal (p') abgibt, wobei das Farbtoneinstell- oder -Korrektursignal das Ausgangssignal eines Filters (f1) ist, an dessen Eingang das Betragssignal (b) anliegt.

2. Digitale Farbsignalverarbeitungsschaltung für Fernsehempfangsteile, der die Farbinformation mittels eines (R-Y)-Farbdifferenzsignals (v) und eines (B-Y)-Farbdifferenzsignals (u) zugeführt wird und bei der aus dem (R-Y)- und dem (B-Y)-Farbdifferenzsignal (v, u) mittels eines Koordinatenwandlers (kp), der kartesische in polare Koordinaten umwandelt, ein Phasenwinkelsignal (p) und ein Betragssignal (b) des resultierenden Zeigers gebildet werden, dadurch gekennzeichnet, daß das Phasenwinkelsignal (p) einer Farbtonstufe (ct) zugeführt wird, deren Ausgang ein modifiziertes Phasenwinkelsignal (p') abgibt, daß das Betragssignal (b) einer Farbsättigungsstufe (cs) zugeführt wird, in der einem ersten Eingang eines Multiplizierers (m) das Betragssignal (b) und einem zweiten Eingang des Multiplizierers (m) ein Betrags-Korrekturfaktor (ak) zugeführt werden und der Ausgang des Multiplizierers (m) ein modifiziertes Betragssignal (b') abgibt, wobei der Betrags-Korrekturfaktor (ak) das Ausgangssignal eines Filters (f2) ist, an dessen Eingang das Phasenwinkelsignal (p) anliegt.

3. Digitale Signalverarbeitungsschaltung nach Anspruch 1 oder 2, dadurch gekennzeichnet, daß die Farbtonstufe (ct) eine Farbton-Filterschaltung (ft) enthält und/oder daß die Farbsättigungsstufe (cs) eine Farbsättigungs-Filterschaltung (fs) enthält.

4. Digitale Signalverarbeitungsschaltung nach einem der vorhergehenden Ansprüche, dadurch gekennzeichnet, daß das modifizierte Phasenwinkelsignal (p') einem ersten Eingang und das modifizierte Betragssignal (b') einem zweiten Eingang eines Koordinaten-Rückwandlers (bk) zugeführt werden, dessen Ausgänge ein modifiziertes (R-Y)- bzw. ein modifiziertes (B-Y) Farbdifferenzsignal (v', u') abgeben.

5. Digitale Signalverarbeitungsschaltung nach Anspruch 1 oder 2, dadurch gekennzeichnet, daß bei Fernsehempfängern die nach dem PAL-Fernsehstandard arbeiten einem PAL-Mittelwertbildner (pm) das Phasenwinkelsignal (p) sowohl direkt als auch über eine Verzögerungseinrichtung (vc), die es um eine Zeilendauer verzögert, zugeführt wird.

6. Digitale Farbsignalverarbeitungsschaltung nach einem der vorhergehenden Ansprüche, dadurch gekennzeichnet, daß der Koordinatenwandler (kp) die Umwandlung der kartesischen in polare Koordinanten mittels einem Iterationsverfahren durchführt.

7. Digitale Signalverarbeitungsschaltung nach Anspruch 6, dadurch gekennzeichnet, daß der Koordinatenwandler (kp) die Umwandlung der kartesischen in polare Koordinaten mittels des CORDIC-Verfahrens durchführt.

## Claims

1. A digital color-signal-processing circuit for television-receiving sections to which the color information is fed by means of an R-Y color-difference signal (v) and a B-Y color-difference signal (u), and wherein a phase-angle signal (p) and a magnitude signal (b) of the resultant are derived from the R-Y and B-Y color-difference signals (v, u) by means of a resolver (kp),
characterized in
that the magnitude signal (b) is fed to a saturation stage (cs) whose output provides a modified magnitude signal (b'), and that the phase-angle signal (p) is fed to a hue stage (ct) in which the phase-angle signal (p) and a hue-control or -correction signal (ck) are applied to a first input and a second input, respectively, of an adder (ad) whose output provides a modified phase-angle signal (p'), with the hue-control or -correction signal being the output signal of a filter (f1) whose input is supplied with the magnitude signal (b).

2. A digital color-signal-processing circuit for television-receiving sections to which the color information is fed by means of an R-Y color-difference signal (v) and a B-Y color-difference signal (u), and wherein a phase-angle signal (p) and a magnitude signal (b) of the resultant are derived from the R-Y and BY color-difference signals (v, u) by means of a resolver (kp) which converts Cartesian into polar coordinates, characterized in that the phase-angle signal (p) is fed to a hue stage (ct) whose output provides a modified phase angle signal (p'), that the magnitude signal (b) is fed to a saturation stage (cs) in which the magnitude signal (b) and a magnitude correction factor (ak) are applied to a first input and a second input, respectively, of a multiplier (m) whose output provides a modified magnitude signal (b'), with the magnitude correction factor (ak) being the output signal of a filter (f2) whose input is supplied with the phase-angle signal (p).

3. A digital signal-processing circuit as claimed in claim 1 or 2, characterized in that the hue stage (ct) contains a hue filter circuit (ft), and/or that the saturation stage (cs) contains a saturation filter circuit (fs).

4. A digital signal-processing circuit as claimed in any one of the preceding claims, characterized in that the modified phase-angle signal (p') and the modified magnitude signal (b') are applied to a first input and a second input, respectively, of a reconverting resolver (bk) whose outputs provide a modified R-Y color-difference signal (v') and a modified B-Y color-difference signal (u'), respectively.

5. A digital signal-processing circuit as claimed in claim 1 or 2, characterized in that in television receivers operating according to the PAL television standard, the phase-angle signal (p) is fed to a PAL averager (pm) both direct and through a delay device (vc) which delays it by the duration of one line.

6. A digital color-signal-processing circuit as claimed in any one of the preceding claims, characterized in that the resolver (kp) performs the conversion of Cartesian into polar coordinates by means of an iterative process.

7. A digital signal-processing circuit as claimed in claim 6, characterized in that the resolver (kp) performs the conversation of Cartesian into polar coordinates by means of an Cordic-process.

## Revendications

1. Circuit numérique de traitement de signaux de télévision pour des circuits de réception de télévision, auquel l'information de couleur est envoyée au moyen d'un signal de différence de couleur (R-Y) (v) et d'un signal de différence de couleur (B-Y) (u) et dans lequel un signal d'angle de phase (p) et un signal de valeur absolue (b) du vecteur résultant sont formés à partir des signaux de différence de couleur (R-Y), (B-Y) (v,u) au moyen d'un convertisseur de coordonnées (kp), qui convertit les coordonnées cartésiennes en coordonnées polaires,
caractérisé par le fait que
le signal de valeur absolue (b) d'un étage de saturation de couleur (cs), dont la sortie délivre un signal de valeur absolue (b') modifié, et que le signal d'angle de phase (p) est envoyé à un étage (ct) de réglage de teinte chromatique, dans lequel le signal d'angle de phase (p) est envoyé à une première entrée d'un additionneur (ad) et un signal de réglage ou de correction de teinte don couleur (ck) est envoyé à une seconde entrée de l'additionneur (ad), et la sortie de l'additionneur (ad) délivre un signal d'angle de phase (p') modifié, le signal de réglage ou de correction de la teinte chromatique étant le signal de sortie d'un filtre (f1), à l'entrée duquel est appliqué le signal de valeur absolue (b).

2. Circuit numérique de traitement de télévision pour des circuits de réception de télévision, auquel l'information de couleur est envoyée au moyen d'un signal de différence de couleur (R-Y) (v) et d'un signal de différence de couleur (B-Y) (u) et dans lequel un signal d'angle de phase (p) et un signal de valeur absolue (b) du vecteur résultant sont formés à partir des signaux de différence de Couleur (R-Y), (B-Y) (v,u) au moyen d'un convertisseur de coordonnées (kp), qui convertit les coordonnées cartésiennes en coordonnées polaires, caractérisé en ce que le signal d'angle de phase (p) d'un étage (ct) de réglage de la teinte de la couleur, dont la sortie délivre un signal d'angle de phase modifié (p'), le signal de valeur absolue (b) est envoyé à un étage de saturation de couleur (cs), dans lequel le signal de valeur absolue (b) est envoyé à une première entrée d'un multiplicateur (m) et un facteur de correction de valeur absolue (ak) est envoyé à une seconde entrée du multiplicateur (m), et la sortie du multiplicateur (m) délivre un signal de valeur absolue modifié (b'), le facteur de correction de valeur absolue (ak) étant le signal de sortie d'un filtre (f2), à l'entrée duquel est appliqué le signal d'angle de phase (p).

3. Circuit numérique de traitement de signaux selon la revendication 1 ou 2, caractérisé en ce que l'étage (ct) de réglage de la teinte de couleur contient un circuit (ft) de filtrage de la teinte de couleur et/ou que l'étage (cs) de réglage de la saturation de couleur contient un circuit (fs) de filtrage de la saturation de couleur.

4. Circuit numérique de traitement de signaux selon l'une des revendications précédentes, caractérisé en ce que le signal d'angle de phase modifié (p') est envoyé à une première entrée et le signal de valeur absolue modifié (b') est envoyé à une seconde entrée d'un convertisseur inverse de coordonnées (pk), dont les sorties délivrent un signal modifié de différence de couleur (R-Y) (v') et un signal de différence de couleur modifié (B-Y) (u').

5. Circuit numérique de traitement de signaux selon la revendication 1 ou 2, caractérisé en ce que, dans le cas de récepteurs de télévision qui fonctionnent selon la norme de télévision PAL, le signal d'angle de phase (p) est envoyé au dispositif (pm) de formation de la valeur moyenne PAL aussi bien directement que par l'intermédiaire d'un dispositif de retardement (vc), qui retarde le signal de la durée d'une ligne.

6. Circuit numérique de traitement de signaux de couleurs suivant l'une des revendications précédentes, caractérisé par le fait que le convertisseur de coordonnées (kp) exécute la conversion des coordonnées cartésiennes en coordonnées polaires au moyen d'un procédé d'itération.

7. Circuit numérique de traitement de signaux selon la revendication 6, caractérisé en ce que le convertisseur de coordonnées (kp) exécute la conversion des coordonnées cartésiennes en coordonnées polaires au moyen du procédé CORDIC.
